# EUROPEAN PATENT SPECIFICATION

(11) **EP 1 879 822 B1**
(45) Date of publication and mention of the grant of the patent: **06.03.2013**
(21) Application number: 06722931.0
(22) Date of filing: 02.05.2006
(51) Int. Cl.: B65G 67/08, B64F 1/32, B65G 21/14

(54) **SYSTEM FOR UNLOADING OR LOADING OF CARGO**
SYSTEM ZUM ENTLADEN ODER LADEN VON FRACHT
SYSTEME DE DECHARGEMENT ET DE CHARGEMENT D'UNE CHARGE

(30) Priority: 02.05.2005 DK 200500643
(43) Date of publication of application: 23.01.2008
(73) Proprietor: Univeyor A/S, 9510 Arden (DK)
(72) Inventor: CHRISTENSEN, Torben, DK-9510 Arden (DK); BRECK, Rasmus, Halfdan, DK-København S (DK); THIERRY-CARSTENSEN, Jakob, DK-2100 København Ø (DK); THØGERSEN, Lars, Højgaard, DK-2300 København S (DK)
(74) Representative: Gregersen, Niels Henrik
(86) International application number: PCT/DK2006/000239
(87) International publication number: WO 2006/117003

(56) References cited:
- WO-A1-98/51598
- WO-A1-2004/050518
- DE-A1- 10 324 755
- DE-U1-202004 009 581
- GB-A- 2 403 205
- JP-A- 05 105 235
- JP-A- 05 208 731
- JP-A- 09 301 538
- JP-A- 2003 081 443

## Description

### Field of the Invention

The present invention concerns a system for loading or unloading general cargo, by way of example cargo packed in boxes.

### Background of the Invention

As the shipping rates on cargo in by way of example containers have dropped sharply during the last decade, it is now economically profitable for firms to produce cargo in a country where by way of example the workforce is cheap, the expertise/know-how is found or the materials are readily accessible, and then subsequently to send the cargo to the country where the cargo is to be sold or used.

In order to fully utilise the capacity of by way of example a container, the producer has packed the cargo in a very compact way in the container. When the container is emptied at the recipient, problems may arise. It may by way of example be difficult to get the cargo out of the container because the container has been packed very hard, or because the individual piece of cargo may be very heavy or have an unmanageable shape so that it will require more than one person to lift the cargo. Hence, the unloading work is demanding in time and resources.

In order to solve the above problems by unloading by way of example a container, a trailer or a lorry, various apparatuses may be used which entirely or partly can empty a container, a trailer or a lorry.

US-A-5 524 747 describes a method and an apparatus for collecting packages where the apparatus includes a mobile frame with collecting means and a receiving table, and where the collecting means may rotate a package by means of a number of pressing members and/or conveyor belts, so that the conveyor belt can be inserted under the bottom of the package in order to move the package to the receiving table.

WO-A1-96/30287 describes a method and a mobile apparatus for mechanical unloading and loading of objects where the apparatus includes an approximately wedge-shaped insert means with a number of rollers and a conveyor belt. The insert means is pressed in under the object, and the rollers advance the object to the conveyor belt.

EP-A1-0571 084 describes an apparatus and a method for loading and unloading a transport container, where the apparatus includes a telescopic conveyor belt which at a front end is provided with a collecting arrangement in the shape of a gripper arm which is controlled by a person in the driver's cabin. Thereby, the gripper arm may get hold of bags and/or packets and dispose them on the inlet of the telescopic conveyor belt.

DE-U-202004009581 discloses a wheel supported mechanical handling device for loading/unloading items of freight to or from a container, warehouse rack or similar, and releases the item for onward movement. The suction pads move in X- and Z-planes and are supported by a jacking mast which inclines in the X-plane under control from a cylinder. The suction pads surrender the load to a reversible conveyor belt and a telescopic conveyor belt.

JP-A-5208731 discloses a cargo handling device for minimizing man power required for unloading within a container and to automate the unloading, and comprising a movement support frame provided with a vertical slide table, a lateral slide table, a longitudinal slide table, a grasping part, a conveyor vertical slide table, and a conveying part is runnable within a container. An extension conveyor is further arranged to a conveyor part connected to the conveying part. A cargo is pulled out to the conveying part through registration of each slide table and operation of a vacuum suction pad, and moved over a conveyor.

WO-A1-9851598 discloses a device and a method for handling freight, especially in parcels, when loading and unloading a cale where the parcel freight is stacked so as to be accessed on a horizontal plane, involving a conveying system for transporting freight to or from the cale. The invention is characterized in that at least one suction crampon device, which can be positioned in the horizontal plane on a freight parcel so as to be solidly and detachably gripped due to sub-pressure exerted on one of its sides to be moved mainly in a horizontal moved mainly in a horizontal plane; that a conveying system is provided to enable parcel freight to be transferred to or from the transport unit and that the suction crampon device moves each parcel individually, directly from the conveying system to the cale or directly from the cale to the conveying system.

DE-A1-103 24 755 discloses a machine for loading and unloading containers with packets of post comprising a gripper mounted on a robot arm. The machine transfers the packets to or from conveyors beside it, by way of example via a transverse roller conveyor.

GB-A-2 403 205 discloses a system for loading and unloading unit loads into a cargo hold in particular of an aircraft, comprising the transport of the unit load to the inner end of the cargo hold during unloading and its transport away from said end during unloading and the transport of the unit load between the apron area and the cargo hold opening. According to said system, the unit load can be conveyed during loading in a transversal direction to the longitudinal axis of the aircraft and also conveyed into the aircraft fuselage in a longitudinal direction and stored in the cargo hold. During unloading, the unit load that has been transported back to the plane of the cargo hold can be conveyed through and away from the cargo hold opening transversally to the longitudinal axis of the aircraft.

JP-A-2003081443 discloses an unloading device capable to securing stability of drawing operation and conveying operation, simplifying a structure, and reducing cost, comprising a carriage moveable on a floor of a cargo housing part such as a container. A carrying out conveyor for carrying out a carton is fixed on the carriage. A cargo receiving platform is supported on a front part of the carriage so as to elevate in a horizontal position, and s suction tool for sucking a plurality of cartons and drawing out at once on the cargo receiving platform is supported so as to elevate independently from the cargo receiving platform and advance and retreat in a longitudinal direction. A first conveyor for moving the carton in a direction of the carrying out conveyor and a second conveyor driven for delivering the carton to the carrying out conveyor from the first conveyor are provided on the cargo receiving platform.

WO-A1-2004050518 discloses a telescopic conveyor device comprising a driving head on its front end that is equipped with its own drive device. Said driving head retracts and extends the telescopic mechanism and in addition displaces optional connected auxiliary equipment such as handling robots, unloading belts or similar. A working platform can be provided on the driving head in order to accommodate equipment can be located on said platform. The additional equipment creates an extra load on the driving wheel of the driving head in such a way that even heavy equipment can be loaded and unloaded safely by the telescopic device into and from the cargo compartment of a vehicle.

### Object of the Invention

It is the object of the present invention to indicate a system for unloading or loading of general cargo, which system is to ensure a simple, efficient, easy and rapid handling of individual pieces of cargo, and where typically only one person is to be used for operating the system.

### Description of the Invention

This is achieved with a system for unloading or loading cargo according to a first aspect of the invention, wherein the system includes first transport means with a handling apparatus and a second longitudinally variable transport means, wherein said first transport means is constructed as a rolling unit with travel wheels, wherein said handling apparatus comprises: a first conveyor interacting with said longitudinally variable transport means and adapted for transporting cargo to and from said second transport means, a second conveyor having a free end moveable in horizontal and vertical directions and adapted for transporting cargo to or from said first conveyor, a third conveyor provided at said free end of said second conveyor and adapted for transporting cargo to or from said second conveyor, and a moveable handling means that interacts with said third conveyor, wherein said moveable handling means comprises a number of engagement means adapted V for engaging the cargo and a moving means arranged to move said engagement means between an active engagement position at a front end of said third conveyor and an inactive waiting position at a rear end of said third conveyor, between said second conveyor and conveyor, between said second conveyor and said third conveyor, so that the cargo can be moved over said engagement means between said second conveyor and said third conveyor.

According to a second aspect of the invention, the system for unloading or loading cargo, by way of example cargo packed in boxes, includes first transport means with a handling apparatus and a second longitudinally variable transport means, wherein said first transport means is constructed as a rolling unit with travel wheels, wherein said handling apparatus comprises: a first conveyor interacting with said longitudinally variable transport means and adapted for transporting cargo to and from said second transport means, a second conveyor having a free end moveable in horizontal and vertical directions and adapted for transporting cargo to or from said first conveyor, a third conveyor provided at said free end of said second conveyor and adapted for transporting cargo to or from said second conveyor, and a moveable handling means that interacts with said third conveyor, wherein said third conveyor comprises a number of narrow conveyor belts and said moveable handling means comprises a number of engagement means in the form of suction cups adapted for engaging the cargo and a number of moving means constituted by pivot arms disposed between the marrow conveyor belts, said arms including the suction cups at their outer ends, said moving means being arranged to move said suction cups between an extended active engagement position at a front end of said third conveyor and an inactive downwards pivoted waiting position at a rear end of said third conveyor down under said narrow conveyor belts.

In connection with using the term "conveyor" it is to be noted that a conveyor in the present invention may be conveyor belts, conveyor rollers or slide rails.

In connection with using the term "cargo" is to be noted that cargo in connection with the present invention may be boxes, bags, plastic packed products and/or items with at least one approximately flat surface.

In order to ensure an efficient, simple, easy and rapid handling of the individual pieces of cargo and to ensure that only one person is to operate the system, the system includes a first conveyor means with a handling apparatus providing for removal of the cargo from the cargo from the container or placing it in the container.

According to the invention, the handling apparatus is arranged at an end part of the second longitudinally variable transport means so that cargo unloaded from the container is transported continuously from the handling means and further on the said first and second transport means.

The handling means interacting with the conveyor is movable so that a person standing beside the handling apparatus may readily move the handling means in front of a piece of cargo and thereby causes engagement with the cargo.

The engagement means may be a vacuum controlled suction cup that sucks onto a side of the cargo so that the cargo can be moved. Alternatively, the engagement means may be one or more conveyor belts, sticky plates, hooks, barbs or similar.

In order to pull a piece of cargo out of a tightly packed container, the engagement means of the handling means are to get hold of an end/side face of the cargo and hold fast thereon, while the engagement means are moving away and thereby pull the cargo out upon a conveyor.

According to the invention, the handling means is connected with a moving means that moves the engagement means between an active engagement position at a front end of the conveyor and an inactive waiting position at a rear end of the conveyor.

In this way, it is possible to maintain the position of the handling means while the moving means moves the engagement means into an active engagement position, where they come to contact an end/side face of a piece of cargo. Subsequently, the moving means is moved backwards in the direction of the conveyor so that the cargo is pulled out on the conveyor, which is then moving the cargo from the engagement means that are released simultaneously. In order that the cargo may pass the engagement means, the moving means are moved so that the engagement means are disposed in inactive waiting position at a rear end of the conveyor whereby the cargo can pass across the engagement means. the engagement means.

In an embodiment of the first aspect of the invention, the moving means is disposed in connection with the conveyor of the handling apparatus so that it divides the conveyor into two parts running at each their side of the moving means.

The moving means may be a belt, a chain or a conveyor belt, which may be arranged at an underlying plane relative to the surface of the conveyor, entailing that the cargo is not transported across the moving means but is supported by the surface of the conveyor instead.

If the moving means is in the same plane as the surface of the conveyor, it is important that the moving means has the same texture as the lateral surface of the conveyor. If the surface does not have the same texture as the lateral surface, it is to have a very smooth surface upon which the cargo can slide without appreciable resistance. This ensures that the cargo is not damaged when moved across the conveyor/moving means.

In an embodiment of the present invention, the conveyor and moving means are powered by the same drive unit, by way of example a motor, so that they move with equal speed. In an alternative embodiment of the present invention, the conveyor and moving means are powered by each their drive unit so that they run with different speeds.

If the moving means is running faster than the conveyor, the engagement of the engagement means with the cargo will cause the cargo to be pulled in onto the conveyor, and only when the engagement means release the engagement with the cargo, the conveyor will co-act to transport the cargo further on.

If the moving means run more slowly than the conveyor, the conveyor will grip the cargo and assist in pulling the cargo out from the container and out upon the conveyor.

Only, when the engagement means disappear in the inactive waiting position it is possible for the cargo to be conveyed onwards.

For easy and rapid unloading/loading of a container, a trailer or a lorry, the said handling dling apparatus is built up as a mobile unit and includes a first conveyor with a free end which is movable in horizontal and vertical directions, and the handling means is found at the free end.

The handling apparatus is a mobile unit as by way of example wheels are mounted on the handling apparatus, entailing that it is easy to move the handling apparatus preferably in the longitudinal direction of the container, depending on how far the unloading/loading of the cargo has advanced. The movable handling means may thereby always be disposed most suitably in relation to the stacked cargo in the container.

The first conveyor is provided with a free end which is connected with the handling means and which is movable in horizontal and vertical direction, entailing that the handling means can be disposed in an arbitrary position in the container; in front of or at the side of a piece of cargo.

For easy and rapid operation of the handling means, this may be provided with a handle so that a person can move around with the handling means in vertical and horizontal direction.

A handle in connection with the handling means implies that a person has to stand close to the handling means in connection with unloading/loading of a container. This is an evident advantage, as secure positioning of the handling means is achieved so that a secure grip is achieved in a piece of cargo, thereby reducing the risk of destroying the cargo during unloading/loading.

The alternative to a handle in connection with the handling means is that the first conveyor is provided with motors that may move the free end of the conveyor in horizontal and vertical directions. These motors may be connected to a control box which is cable connected or wirelessly connected with the motors so that a person standing at the side of the handling apparatus may control the movement of the free end of the conveyor and thereby the handling means.

According to the invention, the handling apparatus is constructed as a mobile unit and includes a second conveyor interacting with the longitudinally variable transport means.

The first conveyor is used for laying off/collecting cargo by means of the handling means and may, as mentioned, be moved in vertical and horizontal directions. In order to transport cargo to or from the first conveyor, the handling apparatus includes a second conveyor which interacts with the first conveyor at one end and interacts with the longitudinally variable transport means at an opposite end.

In an embodiment of the present invention, the longitudinally variable transport means includes a number of conveyor carriages, each provided with a short conveyor and forming a link in the longitudinally variable transport means.

Each conveyor carriage is designed with a conveyor that may be motorised, so that the cargo is moved on to the next conveyor, or it may be a downstream conveyor so that friction from the cargo causes moving of the said conveyor, whereby the cargo is automatically moved on to the next conveyor.

A longitudinally variable transport means may thereby have a number of conveyors which are all motorised or have a combination of conveyors with motor and conveyors without motor. The length of the longitudinally variable transport means depends on how many conveyors that are connected in series.

Since it is important to ensure that a continuous and secure transport of the cargo occurs along the longitudinally variable transport means, for a longitudinally variable transport means combined with conveyors with motor and conveyor without motor, it will be the length of the cargo pieces or the power of the conveyor motors that will decide how many conveyors without motor can be placed between conveyors with motors.

An alternative to using a longitudinally variable transport means with a number of conveyor carriages is for example:
- a conveyor comprising a number of telescoping links where the handling apparatus is connected with the outermost telescoping link;
- modular laying conveyors where a number of modules form a transport path from the handling apparatus to a permanently installed conveyor;
- a telescoping conveyor including a number of conveyor modules which are rolled up in a cabinet and connected with the handling apparatus. Such a conveyor is described in WO-A1-01/51356.

In order to adjust the length of a longitudinally variable transport means, the means includes a number of conveyor carriages, each designed with a short conveyor and forming a link in the longitudinally variable transport means, and the longitudinally variable transport means including a cabinet in which the conveyor carriages can be stacked in inclining position.

This implies that conveyor carriages not forming the transport means are stacked obliquely in the cabinet so that the cargo may be moved freely to or from a permanently installed conveyor and to or from the handling apparatus.

If the cabinet is open upwards, the conveyor carriages are designed so that the short conveyor is accessible along the end parts of the conveyor carriages, implying that stacked conveyor carriages may also be used for transporting cargo.

In order to transport the cargo to or from the longitudinally variable transport means to or from a permanently installed conveyor, the cabinet is provided with a conveyor having one end interacting with the conveyor carriages, where the conveyor in a preferred embodiment of the present invention is arranged at an upper side of the cabinet and thereby forms a connecting link between conveyor carriages of the longitudinally variable transport means and the permanently installed conveyor.

By using the upper side of the cabinet to move a conveyor, the minimum length required of the longitudinally variable transport means is reduced, and the cargo is furthermore led up to a level above floor level whereby the cargo e.g. may be handled further with a permanently installed conveyor, sorted on a sorting table or similar.

All transitions between conveyor carriages, cabinet conveyor and/or the handling apparatus conveyors are to be designed so that the cargo, irrespectively whether it is moved forward or backward by the conveyors, is not moved up over an edge in order to pass a transition. An edge increases the risk that cargo is accumulated on the conveyors of the system, which may cause the cargo to be destroyed or fall off the conveyors.

In order for the system to take up as little space as possible when not in use, the handling apparatus is adapted to be placed over the cabinet. This means that the system is only taking up space that is equal to length x width of the handling apparatus.

The receiving stations of the firms typically include several unloading or loading gates, so that the firm can operate with continuous flow of cargo/products to and from the firm.

Depending on the number of unloading or loading gates, there may by way of example be provided a system according to the present invention in front of each unloading or loading gate so that cargo can be transported to and from all unloading or loading gates at the same time.

If the receiving station of the firm includes many unloading or loading gates, it may be a great economical strain if a system according to the present invention is disposed in front of each unloading or loading gate. The system may in a way known per se be adapted to be laterally displaced in relation to the unloading or loading gates, so that a system according to the invention may serve several unloading or loading gates.

According to the second aspect of the invention the handling apparatus includes a conveyor with a number of narrow conveyor belts, and that the moving means are constituted by pivotable arms disposed between the conveyor belts, the arms including the engagement means in the form of suction cups at their outer ends, the cups being arranged to assume an extended active position at the front end of the handling apparatus or an inactive downwards pivoted position down under the conveyor belts.

In an embodiment of the second aspect of the invention the pivotable arms for the suction cups are mounted on a common transverse support arm, which is pivotably mounted on a central pivoting shaft, and which is are adapted to be angled by means of control wires connected to opposing ends of the common support arm and to peripheral points of a turning disc at the rear end of the first transport means. In a very simple is hereby ensured that the suction cups are always correctly directed forward, that is also even if the handling apparatus is angled relative to sidewalls of by way of example a container.

It may be further advantageous that the handling apparatus at a sectionally divided front edge is provided with narrow positively driven rollers which are suspended on a non-linear shaft and which are drivingly connected with a number of the conveyor belts.

The system according to the second aspect of the invention is suitably designed so that springs are interposed between the suction cups and the pivotable arms, and that the suction cups are functionally divided into several groups that may be connected to each their vacuum source.

The system according to the invention is preferably designed so that the longitudinally variable conveyor includes a number of moveable conveyors which at a rear end are provided with legs with travel wheels, and which at a front end are provided with a support roller which is adapted to interact with inclining rails running upwards/forwards and which support the front end of the moveable conveyors.

### Description of the Drawing

The invention is explained below with reference to the drawing, where:
- Fig. 1: shows a side view of an embodiment of a system according to the invention;
- Fig. 2: shows a side view of the system shown in Fig. 1 in another operative situation;
- Fig. 3: shows a side view of a system, cf. Fig. 1, shown partly inserted into a container;

- Fig. 4: shows a side view of a system, cf. Fig. 1, shown further inserted into a container;
- Fig. 5: shows a perspective view of an embodiment of a handling means for a system according to the invention, shown with the suction cups in foremost active position;
- Fig. 6: shows a perspective view of a handling means, cf. Fig. 5, shown the suction cups in an inactive, retracted position;
- Fig. 7: shows a perspective view of a preferred embodiment of a system according to the invention;
- Fig. 8: shows a simplified side view of the system according to the invention shown in Fig. 7;
- Fig. 9: shows a perspective view of a front part of the system according to the invention shown in Fig. 6;
- Fig. 10: shows a plan view of the system according to the invention shown in Fig. 6, as seen from above, and with the front part of the system turned to the right;
- Fig. 11: shows a perspective side view of the foremost handling apparatus for a system according to the invention;
- Fig. 12: shows a plan view of the handling apparatus, cf. Fig 11;
- Fig. 13: shows a side view, partly in section, of the handling apparatus, cf. Fig. 11; and
- Fig. 14: shows a perspective view of the handling apparatus, cf. Fig. 11.

### Detailed Description of the Invention

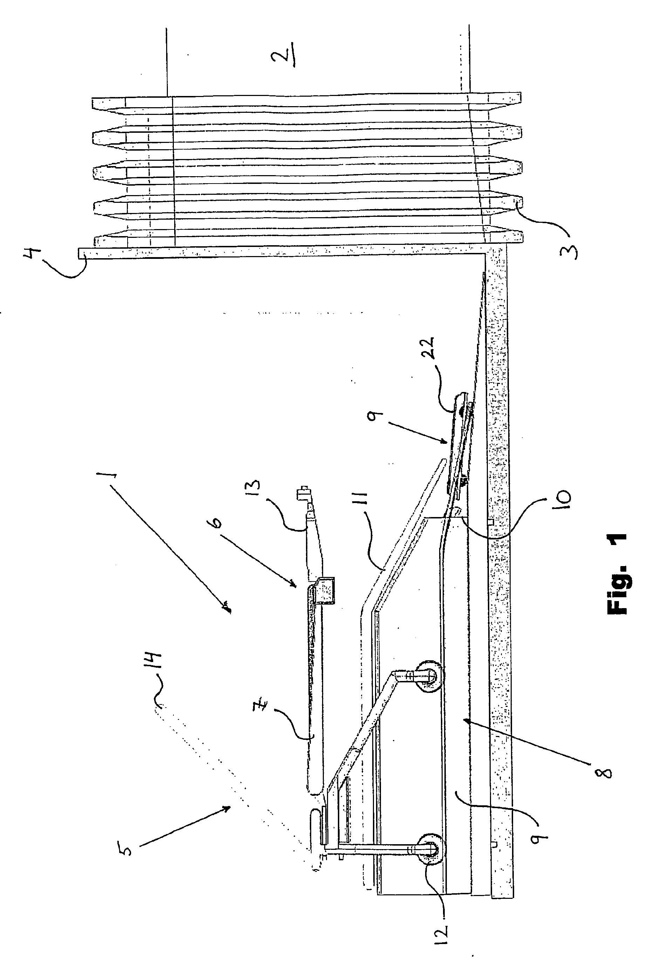

Fig. 1 shows a system 1 in an inactive position. The system 1 is disposed opposite a container 2 which is arranged via bellows 3 in front of a loading/unloading gate 4. The system 1 includes a mobile first transport means 5 with a handling apparatus 6 including a ing a conveyor belt 7 which is adapted for transporting cargo (not shown) to or from the first transport means 5. The system 1 furthermore includes a second longitudinally variable transport means 8 which includes a number of transport carriages 9, a cabinet 10 and an upper conveyor 11, where the not used transport carriages 9 are stacked inclining in the cabinet 10. The first transport means 5 is mobile and provided with wheels 12 and arranged so that the first transport means 5 in an inactive position can be placed across the cabinet 10. The handling apparatus 6 includes a movable handling means 13 that interacts with the conveyor belt 7, and which is adapted to engage the piece of cargo (not shown). The handling apparatus 6 further includes a pivotable conveyor belt 14 which is raised in the inactive position. The conveyor carriages 9 are each provided with a short conveyor 22.

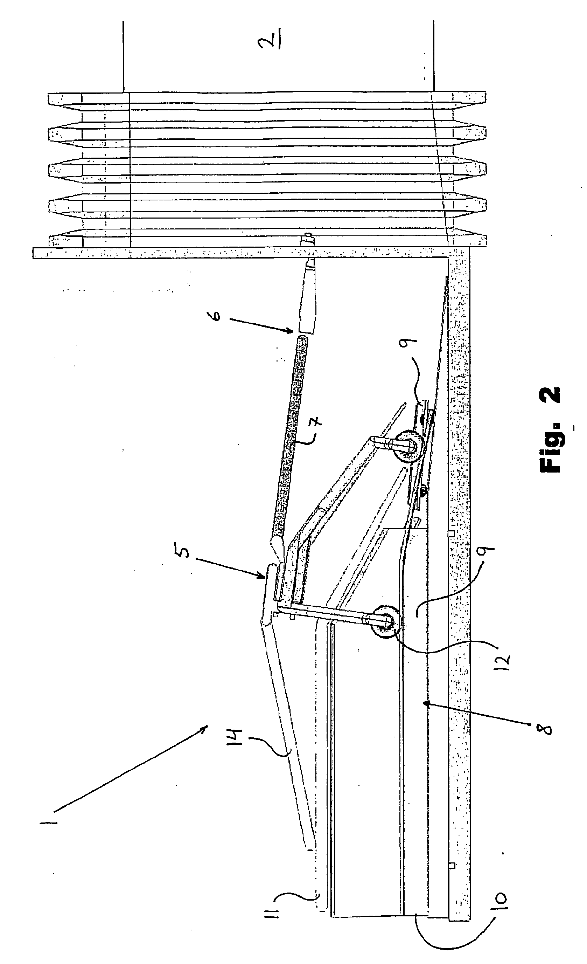

Fig. 2 shows system 1 where the first transport means 5 is moving into the container 2. The pivotable conveyor belt 14 is lowered and interacts with the upper conveyor 11 on the cabinet 10. The second longitudinally variable transport means 8 is not yet put into use and the conveyor carriages 9 are therefore stacked inclining in the cabinet 10.

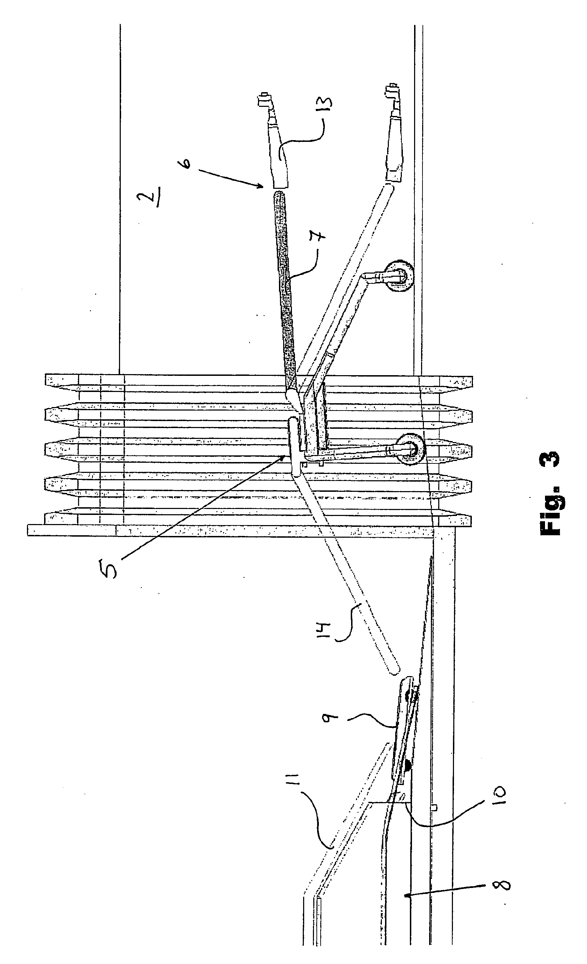

Fig. 3 shows system 1 where the first transport means 5 is disposed in the container 2. The pivotable conveyor belt 14 interacts with foremost conveyor carriage 9 of the second longitudinally variable transport means 8, and the foremost conveyor carriage 9 interacts with the upper conveyor 11 on the cabinet 10, so that a piece of cargo can be transported continuously to and from the first transport means 5 via the foremost conveyor carriage 9 and the upper conveyor 11. The handling apparatus 5 is constructed as a mobile unit and includes a first conveyor 7 with a free end which is movable in horizontal and vertical directions, and a handling means 13 is provided at the free end.

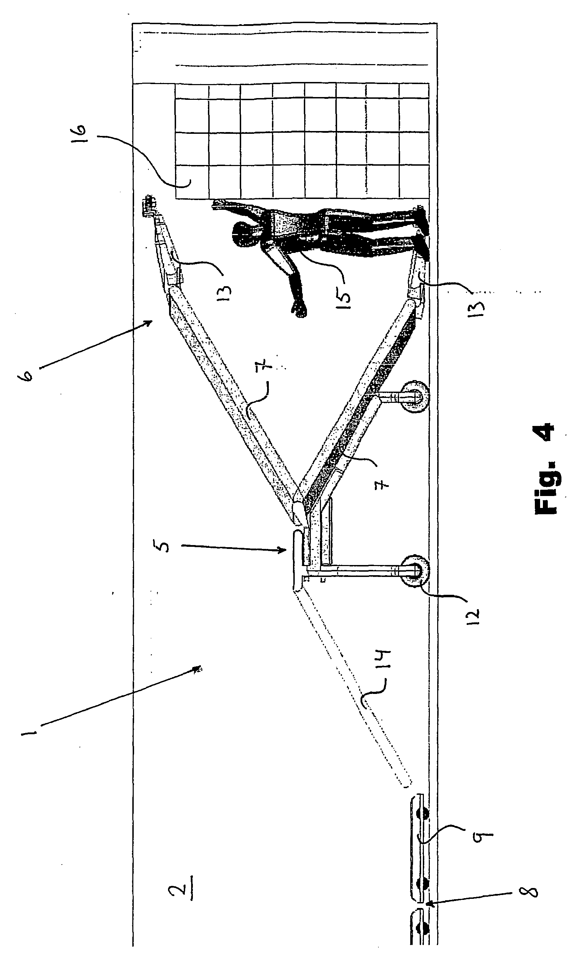

Fig. 4 shows a system 1 where the first transport means 5 is placed in the container 2, and where a person 15 is standing beside the first transport means 5 and moves the first conveyor 7, so that handling means 13 can be placed opposite a piece of cargo 16.

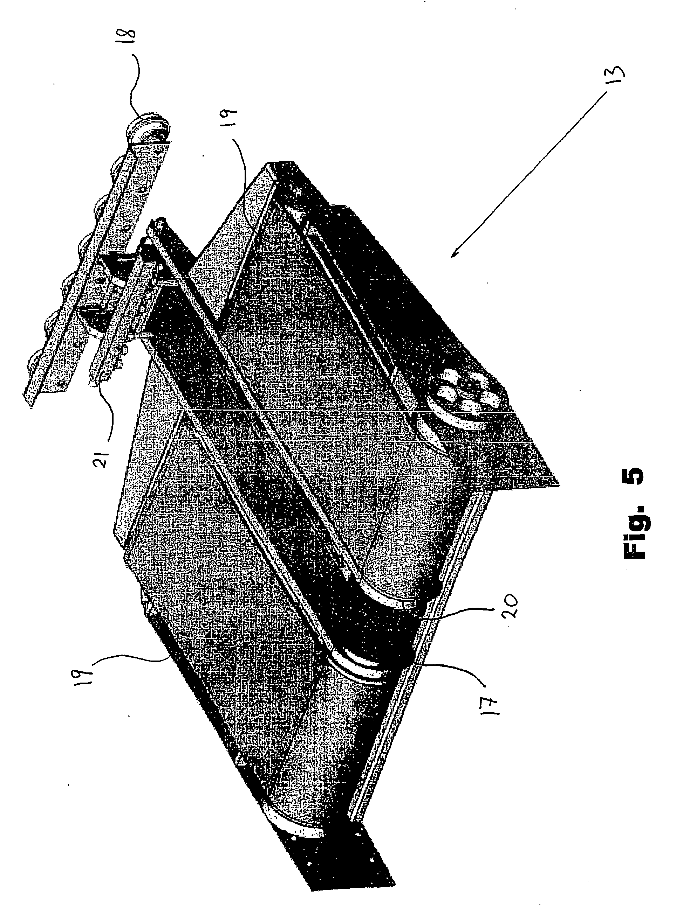

Fig. 5 shows a handling means 13 which includes a moving means 17 on which engagement means 18 are arranged. It is here shown in active engagement position at a foremost end of a bipartite conveyor 19. The moving means 17 may move engagement means 18 back along means 18 back along the bipartite conveyor 19 via tracks 20. Engagement means 18 are shown as suction cups provided with vacuum from manifold 21.

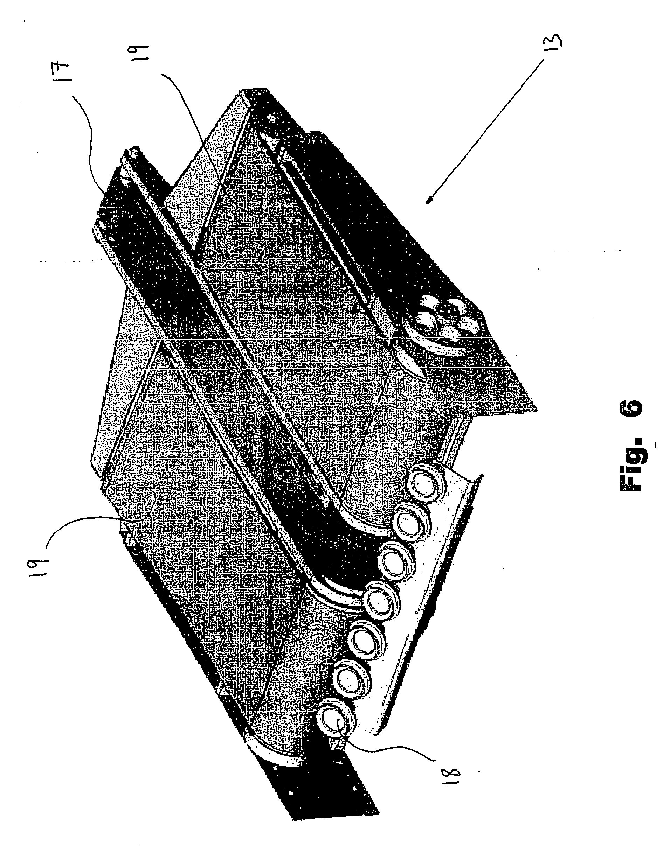

Fig. 6 shows a handling means 13 where the moving means 17 have moved engagement means 18 into inactive waiting position at the rear end of the two-part conveyor 19, so that cargo (not shown) can be moved past the engagement means 18.

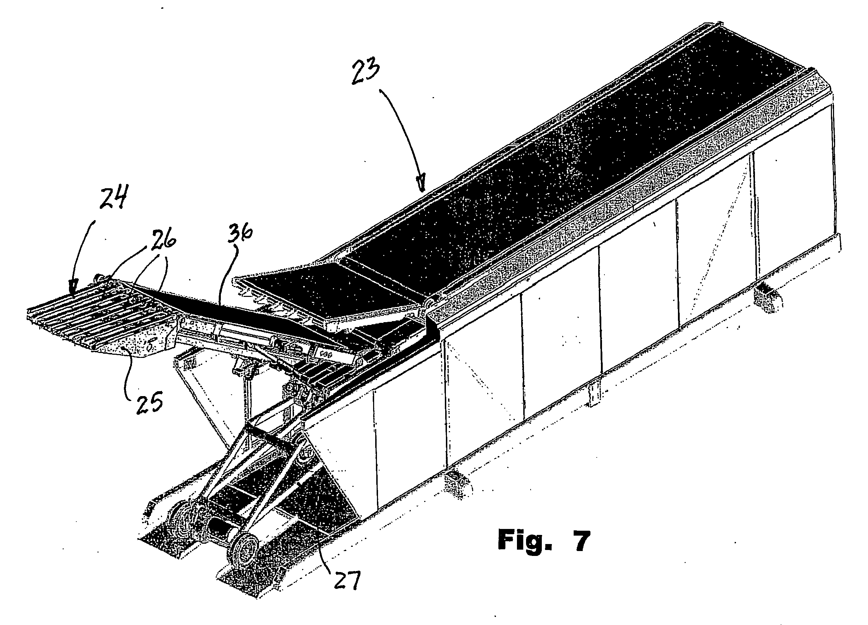

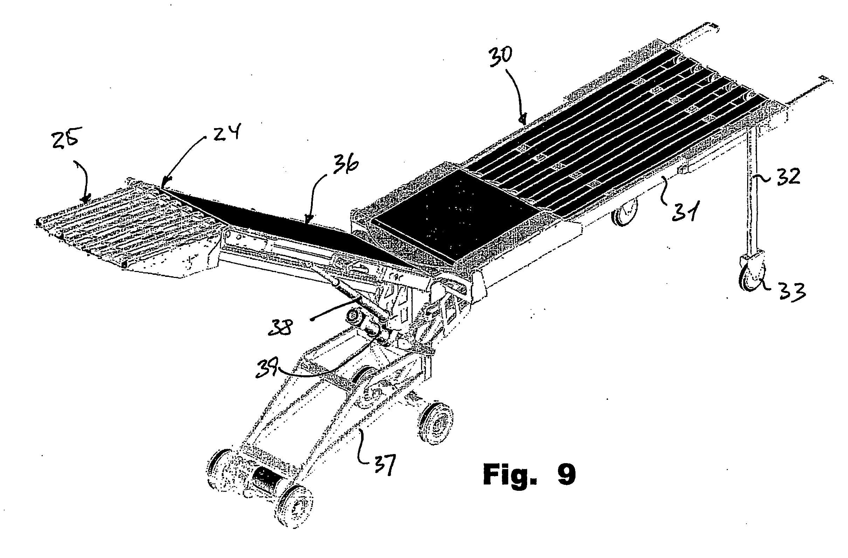

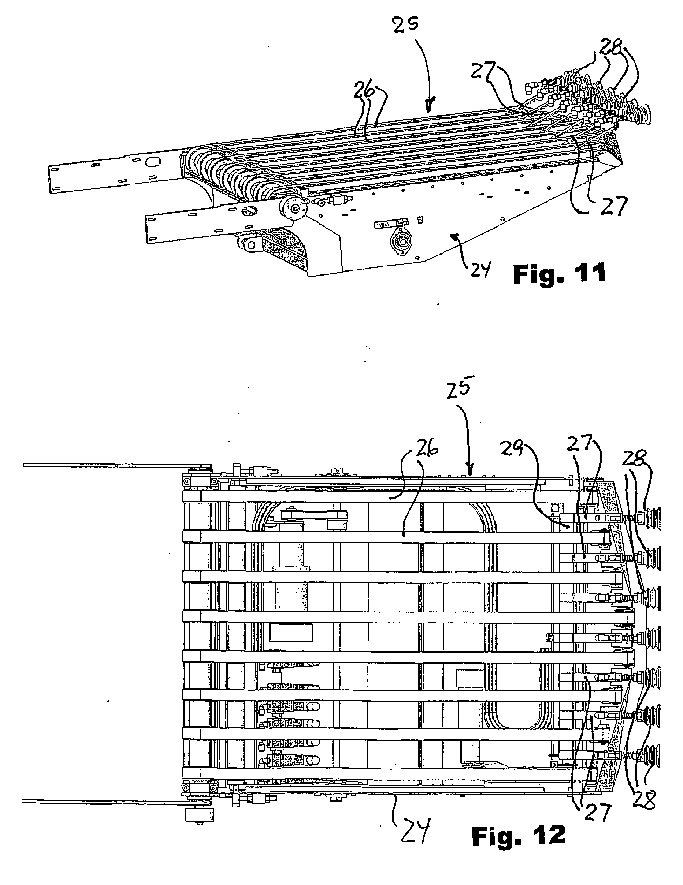

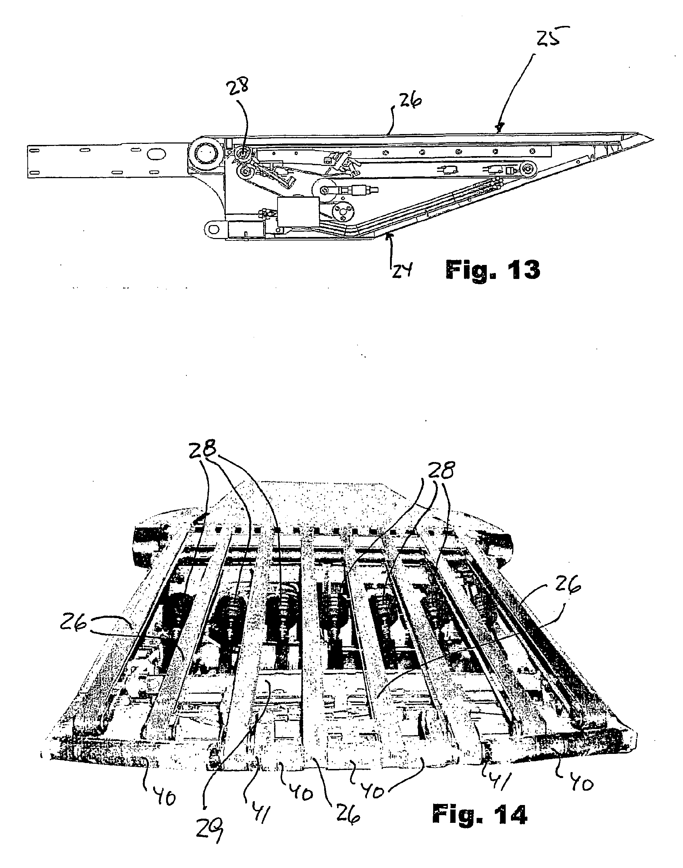

In the preferred embodiment of a system 23 according to the invention shown in Figs. 7-14 it appears clearly that a handling apparatus 24 includes a handling means in the form of a conveyor 25 with a number of narrow conveyor belts 26, and that the moving means are constituted by pivotable arms 27 interposed between the conveyor belts 26, where outer ends of the arms 27 include said engagement means in the form of suction cups or pads 28 which are adapted to assume an advanced active position (Figs. 11, 12) at the front end of the handling apparatus 24, or and inactive downwards pivoted position (Fig. 13) down under the conveyor belts 26.

With the intention of automatically controlling the direction of the pivotable arms 27 for the suction cups 28, the pivotable arms 27 are mounted on a common transverse support arm 29 which is pivotably mounted on a central pivoting shaft. The support arm 29 is adapted to be angled (pivoted) by means of control wires connected with opposing ends of the common support arm 29 and with peripheral points of a turning disc at a rear end of the first transport means 5, 7.

The common support arm 29 is moved back and forth in the handling apparatus 24 by means of not shown drive belts arranged along opposing inner sides of the handling apparatus 24, as the pivoting movement itself of the common support arm 29 for suction cups 28 in relation to the top side plane of the handling apparatus 24 occurs by means of a not shown common electric motor with belt drive.

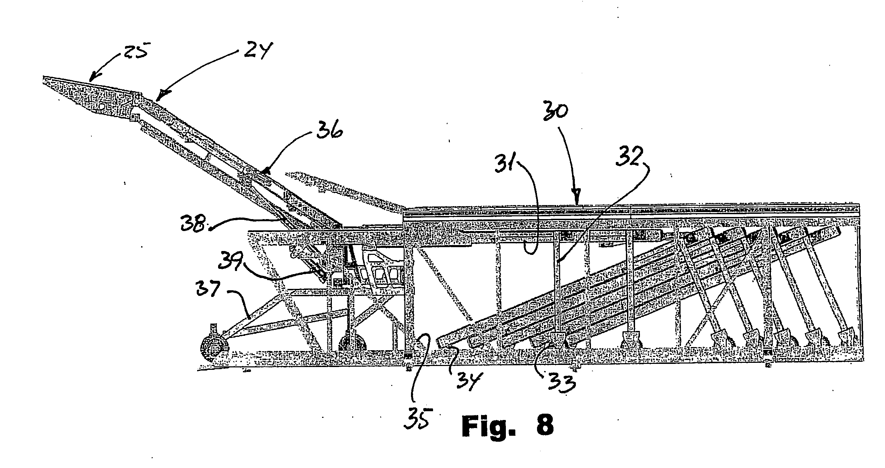

As it appears from Fig. 8, the second transport means 30 consists of a number of moveable conveyors 31 which at a rear end are provided with legs 32 and travel wheels 33, and which at a front end are provided with support rollers 34 adapted to interact with inclining rails 35 extending upwards/forwards, and which are adapted to support the front end of the rolling the front end of the rolling conveyors 31.

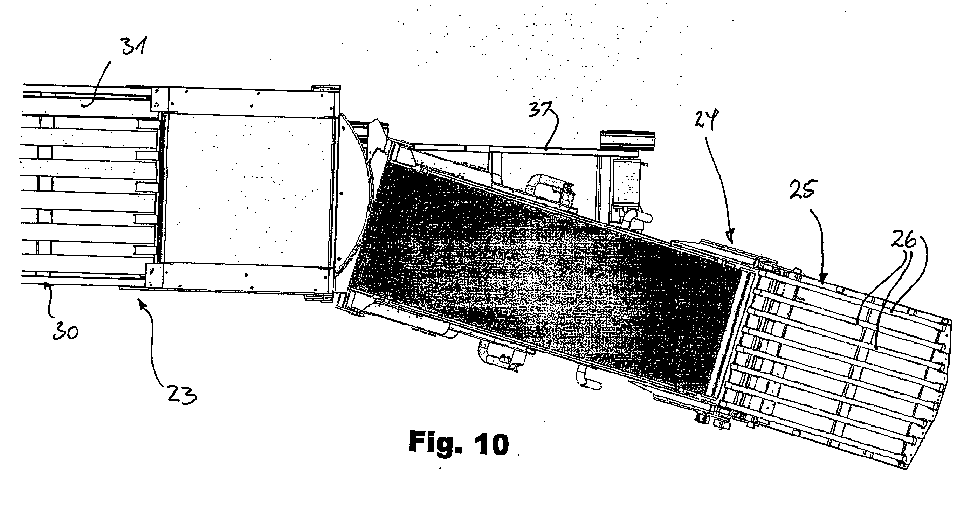

Besides, in Fig. 10 is clearly seen that the handling apparatus 24 interacts at the rear with a belt conveyor 36, which is rigidly connected laterally with the handling apparatus 24, that is following its pivoting movement both in vertical and horizontal direction, as the handling apparatus 24 may be elevated in relation to a carriage frame 37 by means of a strong spindle unit 38 with associated electric gear motor 39.

As it most clearly appears from Fig. 14, at a foremost, sectionalised edge the handling apparatus 24 is provided with actively powered, narrow rubber rollers 40, which are mounted on a co-driven non-linear shaft 41 which is drivingly connected with at least the two central conveyor belts 26, and which has the purpose of assisting with getting hold of cardboard boxes placed on the floor of a container.

## Claims

1. A system (1) for unloading or loading cargo, by way of example cargo packed in boxes (16), and including first transport means (5) with a handling apparatus (6) and a second longitudinally variable transport means (8), wherein said first transport means (5) is constructed as a rolling unit with travel wheels (12), wherein said handling apparatus (6) comprises: a first conveyor (14) interacting with said longitudinally variable transport means (8) and adapted for transporting cargo to and from said second transport means (8), a second conveyor (7) having a free end moveable in horizontal and vertical directions and adapted for transporting cargo (16) to or from said first conveyor (14), a third conveyor (19) provided at said free end of said second conveyor (7) and adapted for transporting cargo (16) to or from said second conveyor (7), and a moveable handling means (13) that interacts with said third conveyor (19), wherein said moveable handling means (13) comprises a number of engagement means (18) adapted for engaging the cargo (16) and a moving means (17) arranged to move said engagement means (18) between an active engagement position at a front end of said third conveyor (19) and an inactive waiting position at a rear end of said third conveyor (19), between said second conveyor (7) and said third conveyor (19), so that the cargo can be moved over said engagement means (18) between said second conveyor (7) and said third conveyor (19).

2. A system (23) for unloading or loading cargo, by way of example cargo packed in boxes (16), and including first transport means (5) with a handling apparatus (24) and a second longitudinally variable transport means (30), wherein said first transport means (5) is constructed as a rolling unit with travel wheels (12), wherein said handling apparatus (24) comprises: a first conveyor (14) interacting with said longitudinally variable transport means (8) and adapted for transporting cargo to and from said second transport means (30), a second conveyor (7) having a free end moveable in horizontal and vertical directions and adapted for transporting cargo (16) to or from said first conveyor (14), a third conveyor (25) provided at said free end of said second conveyor (7) and adapted for transporting cargo (16) to or from said second conveyor (7), and a moveable handling means (13) that interacts with said third conveyor (25), wherein said third conveyor (25) comprises a number of narrow conveyor belts (26) and said moveable handling means comprises a number of engagement means (28) in the form of suction cups adapted for engaging the cargo (16) and a number of moving means (27) constituted by pivot arms disposed between the narrow conveyor belts (26), said arms including the suction cups (28) at their outer ends, said moving means (27) being arranged to move said suction cups (28) between an extended active engagement position at a front end of said third conveyor (25) and an inactive downwards pivoted waiting position at a rear end of said third conveyor (25) down under said narrow conveyor belts (26).

3. System according to claims 1 or 2, wherein said longitudinally variable transport means (8) includes a number of rolling conveyors (9), each designed with a conveyor (22) and each forming a link in the longitudinally variable transport means (8), where the rolling conveyors (9) are adapted to be grouped together in mutually inclining positions when not in use.

4. System according to claim 2, wherein said pivotal arms (27) for the suction cups (28) are mounted on a common transverse support arm (29), which is pivotally mounted on a central pivoting shaft, and which is adapted to be angled by means of control wires connected to opposing ends of the common support arm (29) and to peripheral points of a turning disc at the rear end of the first transport means (5, 7).

5. System according to claim 2, wherein said handling apparatus (24) at a sectional divided front edge is provided with narrow positively driven rollers (40) which are suspended on a non-linear shaft (42) and which is drivingly connected with a number of the narrow conveyor belts (26).

6. System according to claim 2, wherein springs are interposed between the suction cups (28) and the pivotal arms (27), and that the suction cups (28) are functionally divided into several groups that may be connected to each their vacuum source.

7. System according to claims 1 or 2, wherein said longitudinally variable conveyor (30) includes a number of rolling conveyors (31) which at a rear end are provided with legs (32) legs (32) with travel wheels (33), and which at a front end are provided with a support roller (34) which is adapted to interact with inclining rails (35) running upwards/forwards and which are arranged to support the front end of the rolling conveyors (31).

## Patentansprüche

1. System (1) zum Entladen und Laden von Frachtgut, z.B. in Kasten (6) verpacktem Frachtgut und umfassend erste Transportmittel (5) mit einem Handhabungsgerät (6) und ein zweites, in der Längsrichtung veränderliches Transportmittel (8), wobei das erste Transportmittel (5) als eine rollende Einheit mit Laufrädern (12) gebaut ist, wobei das Handhabungsgerät (6) folgendes aufweist:
- einen ersten, mit dem in der Längsrichtung veränderlichen Transportmittel (8) wechselwirkenden und zur Förderung von Frachtgut zum und vom zweiten Transportmittel (8) vorgesehenen Förderer (14),
- einen zweiten, ein in waagerechten und senkrechten Richtungen bewegbares freies Ende aufweisenden, zur Förderung von Frachtgut (16) zum oder vom ersten Förderer (14) vorgesehenen Förderer (7),
- einen dritten, am freien Ende des zweiten Förderers (7) angeordneten, zur Förderung von Frachtgut (16) zum oder vom zweiten Förderer (7) vorgesehenen Förderer (19),
- und ein bewegbares, mit dem dritten Förderer (19) wechselwirkendes Handhabungsmittel (13), wobei das bewegbare Handhabungsmittel (13) eine Vielzahl von Eingriffsmitteln (18) aufweist, die zum Eingreifen mit dem Frachtgut (16) vorgesehen sind, und ein Verlegungsmittel (17), das für die Verlegung der Eingriffsmittel (18) zwischen einer aktiven Eingriffsposition an einem vorderen Ende des dritten Förderers (19) und einer inaktiven Warteposition am hinteren Ende des dritten Förderers (19) vorgesehen ist, zwischen dem zweiten Förderer (7) und dem dritten Förderer (19), so dass das Frachtgut über die Eingriffsmittel (18) zwischen dem zweiten Förderer (7) und dem dritten Förderer (19) verlegbar ist.

2. System (23) zum Entladen und Laden von Frachtgut, z.B. in Kasten (16) verpacktem Frachtgut und umfassend erste Transportmittel (5) mit einem Handhabungsgerät (24) und ein zweites, in der Längsrichtung veränderliches Transportmittel (30), wobei das erste Transportmittel (5) als eine rollende Einheit mit Laufrädern (12) gebaut ist, wobei das Handhabungsgerät (24) folgendes aufweist:
- einen ersten, mit dem in der Längsrichtung veränderlichen Transportmittel (8) wechselwirkenden, zur Förderung von Frachtgut zum und vom zweiten Transportmittel (30) vorgesehenen Förderer (14),
- einen zweiten, ein in waagerechten und senkrechten Richtungen bewegbares freies Ende aufweisenden, zur Förderung von Frachtgut (16) zum oder vom ersten Förderer (14) vorgesehenen Förderer (7),
- einen dritten, am freien Ende des zweiten Förderers (7) angeordneten, zur Förderung von Frachtgut (16) zum oder vom zweiten Förderer (7) vorgesehenen Förderer (25),
- und ein bewegbares, mit dem dritten Förderer (19) wechselwirkendes Handhabungsmittel (13), wobei der dritte Förderer (25) eine Vielzahl von schmalen Förderbändern (26) aufweist, und das bewegbare Handhabungsmittel eine Vielzahl von Eingriffsmitteln (28) in der Form von Saugnäpfen, die fürs Eingreifen mit dem Frachtgut (16) vorgesehen sind, und eine Vielzahl von Verlegungsmitteln (27), die durch die zwischen den schmalen Förderbändern (26) vorgesehenen Schwenkarme gestaltet sind, aufweist, wobei die Arme die Saugnäpfe (28) an ihren Aussenenden umfassen, wobei die Verlegungsmittel (27) zur Verlegung der Saugnäpfe (28) zwischen einer erweiterten aktiven Eingriffsposition am vorderen Ende des dritten Förderers (25) und einer inaktiven, nach unten geschwenkten Warteposition an einem hinteren Ende des dritten Förderers (25) unter den schmalen Förderbändern (26) angeordnet sind.

3. System nach Anspruch 1 oder 2, wobei das in der Längssrichtung veränderliche Transportmittel (8) eine Vielzahl von Rollförderern (9) umfasst, die jeweils mit einem Förderer (22) gestaltet sind und jeweils ein Glied in dem in der Längsrichtung veränderlichen Transportmittel (8) bilden, wobei die Rollförderer (9) wenn außer Gebrauch zur Gruppenanordnung in gegenseitig geneigten Positionen vorgesehen sind.

4. System nach Anspruch 2, wobei die Schwenkarme (27) für die Saugnäpfe (28) auf einem gemeinsamen, quer verlaufenden und auf einer zentralen feststehenden Drehachse drehbar gelagerten Stützarm (29) angeordnet sind, der zum Abwinkeln durch Steuerkabel, die mit gegenüberliegenden Enden der gemeinsamen Stützarm (29) und mit Randpunkten einer drehenden Scheibe am hinteren Ende des ersten Transportmittels (5, 7) verbunden sind, vorgesehen ist.

5. System nach Anspruch 2, wobei das Handhabungsgerät (24) an einer sektionsaufgeteilten Vorderkante mit schmalen, zwangsgelenkten Rollen (40) versehen ist, die an einer nichtlinearen Welle (42) aufgehängt werden, und das mit einer Vielzahl von den schmalen Förderbändern (26) betriebsmässig verbunden ist.

6. System nach Anspruch 2, wobei Federn zwischen den Saugnäpfen (28) und den Schwenkarmen (27) angeordnet sind, und dass die Saugnäpfe (28) in mehrere, mit jeweiligen Vakuumquellen verbindbaren Gruppen finktionsmässig aufgeteilt sind.

7. System nach Anspruch 1 oder 2, wobei der in der Längsrichtung veränderliche Förderer (30) eine Vielzahl von Rollförderern (31) umfasst, die am hinteren Ende mit Laufrädern (33) aufweisenden Schenkeln (32) versehen sind, und die am vorderen Ende eine Stützrolle (34) aufweisen, die für die Wechselwirkung mit geneigten, aufwärts/vorwärts verlaufenden Schienen (35) vorgesehen sind, und zur Unterstützung der vorderen Enden der Rollförderer (31) vorgesehen sind.

## Revendications

1. Système (1) pour décharger ou charger des marchandises, par exemple des marchandises emballées dans des boîtes (16), et comprenant un premier moyen de transport (5) avec un appareil de manutention (6) et un second moyen de transport de longueur variable (8), ledit premier moyen de transport (5) est construit comme une unité mobile avec des roues de déplacement (12), ledit appareil de manutention (6) comprenant: un premier transporteur (14) interagissant avec ledit moyen de transport de longueur variable (8) et conçu pour le transport de marchandises vers et depuis ledit second moyen de transport (8), un deuxième transporteur (7) ayant une extrémité libre mobile dans les directions horizontale et verticale, et conçu pour le transport de marchandises (16) vers ou depuis ledit premier transporteur (14), un troisième transporteur (19) situé au niveau de ladite extrémité libre dudit second transporteur (7) et conçu pour le transport de marchandises (16) vers ou depuis ledit second convoyeur (7), et un moyen de manutention mobile (13) qui coopère avec ledit troisième transporteur (19), ce moyen de manutention mobile (13) comprend un nombre de moyens d'engagement (18) conçu pour venir en contact avec les marchandises (16) et un moyen de déplacement (17) conçu pour déplacer lesdits moyens d'engagement (18) entre une position d'engagement active à une extrémité avant du troisième tranporteur (19) et une position d'attente inactive au niveau d'une extrémité arrière dudit troisième transporteur (19), entre ledit second transporteur (7) et ledit troisième transporteur (19), de sorte que la charge peut être déplacée au-dessus dudit moyen d'engagement (18) entre ledit deuxième transporteur (7) et ledit troisième transporteur (19).

2. Système (23) servant à décharger ou charger des marchandises, par exemple des marchandises emballées dans des boîtes (16), et comprenant un premier moyen de transport (5) avec un appareil de manutention (24) et un second moyen de transport de longueur variable (30), ledit premier moyen de transport (5) est construit comme une unité mobile avec des roues de déplacement (12), ledit appareil de manutention (24) comprenant: un premier transporteur (14) interagissant avec ledit moyen de transport de longueur variable (8) et conçu pour le transport de marchandises vers et depuis ledit second moyen de transport (30), un deuxième transporteur (7) ayant une extrémité libre mobile dans les directions horizontale et verticale, et conçu pour le transport de marchandises (16) vers et depuis ledit premier transporteur (14), un troisième transporteur (25) disposé au niveau de ladite extrémité libre dudit second transporteur (7) et conçu pour le transport de marchandises (16) vers ou depuis ledit second transporteur (7), et un moyen de manutention mobile (13) qui interagit avec ledit troisième transporteur (25), ledit troisième transporteur (25) comprend un nombre de bandes transporteuses étroites (26) et ledit moyen de manutention mobile comprend un nombre de moyens d'engagement (28) en forme de ventouses conçues pour venir en contact avec la cargaison (16) et un nombre de moyens de déplacement (27) constitués par des bras pivotants disposés entre les bandes transporteuses étroites (26), lesdits bras comportant les ventouses (28) au niveau de leurs extrémités extérieures, lesdits moyens de déplacement (27) étant agencés pour déplacer les ventouses (28) entre une position d'engagement active élargie au niveau d'une extrémité avant dudit troisième transporteur (25) et une position d'attente inactive pivotée vers le bas au niveau d'une extrémité arrière du troisième transporteur (25) vers le bas en dessous desdites bandes transporteuses étroites (26).

3. Système selon les revendications 1 ou 2, où ledit moyens de transport de longueur variable (8) comprend un nombre de transporteurs mobiles (9), chacun conçu avec un transporteur (22) et dont chacun forme une liaison dans le moyen de transport de longueur variable (8), où les transporteurs mobiles (9) sont conçus pour être groupés ensemble dans des positions s'inclinant lorsqu'ils ne sont pas utilisés.

4. Système selon la revendication 2, où lesdits bras pivotants (27) des ventouses (28) sont montés sur un bras de support commun transversal (29), qui est monté de manière pivotante sur un arbre de pivotement central, et qui est conçu pour être incliné au moyen de câbles de commande connectés à des extrémités opposées des bras de support (29) et à des points périphériques d'un disque tournant à l'extrémité arrière du premier moyen de transport (5, 7).

5. Système selon la revendication 2, où ledit appareil de manutention (24) au niveau d'un bord avant divisé en sections est pourvu de rouleaux étroits entraînés positivement (40) qui sont suspendues sur un arbre non linéaire (42) et qui est relié en entraînement à un nombre de bandes transporteuses étroites (26).

6. Système selon la revendication 2, où des ressorts sont intercalés entre les ventouses (28) et les bras pivotants (27), et que les ventouses (28) sont fonctionnellement divisé en plusieurs groupes, qui peuvent être reliées chacune à leur source de vide.

7. Système selon les revendications 1 ou 2, où ledit transporteur de longueur variable (30) comprend un nombre de transporteurs (31) qui, au niveau d'une extrémité arrière sont pourvus de pieds (32) avec des roues de déplacement (33), et qui au niveau d'une extrémité avant sont pourvues d'un rouleau de support (34) qui est conçu pour interagir avec des rails inclinés (35) s'étendant vers le haut/vers l'avant et qui sont disposé pour supporter l'extrémité avant des transporteurs mobiles (31).
